# EUROPEAN PATENT APPLICATION

(11) **EP 1 978 183 A2**
(43) Veröffentlichungstag der Anmeldung: **08.10.2008**
(21) Anmeldenummer: 08450048.7
(22) Anmeldetag: 31.03.2008
(51) Int. Cl.: E04H 1/02, F24D 11/00

(54) **Energiesparhaus**

(30) Priorität: 30.03.2007 AT 20707 U
(71) Anmelder: Hierzer, Andreas, 8010 Graz (AT)
(72) Erfinder: Hierzer, Andreas, 8010 Graz (AT)
(74) Vertreter: Margotti, Herwig Franz

(57) **Zusammenfassung**

Ein Energiesparhaus (1) umfasst zumindest eine vom externen Spannungsnetz unabhängige Energieerzeugungsvorrichtung, ein Heizsystem, ein Energiespeichersystem (5), ein Lastmanagementsystem (8), und eine Hausstromanlage (19), wobei die Hausstromanlage (19) im Niederspannungsbereich betreibbar ist.

## Beschreibung

Die Erfindung betrifft ein Energiesparhaus mit elektrischer Ausstattung im Niederspannungsbereich.

Energiesparhäuser, insbesondere Niedrigenergiehäuser bzw. in ihrer weiterentwickelten Form Passivhäuser, Nullhäuser und Plusenergiehäuser, sind im Wesentlichen dadurch definiert, dass der spezifische Transmissionswärmeverlust und der Primärenergiebedarf des Hauses sehr niedrig sind. Ersteres wird durch eine entsprechende Isolierung ermöglicht, letzteres ist insbesondere in dem geringen Heizwärmebedarf begründet, wodurch auf eine konventionelle Heizung verzichtet werden kann.

Dennoch ist der Primärenergiebedarf insbesondere durch die elektrische Anlage, welche gewöhnlich auf 230 V/50 Hz Wechselspannung betrieben wird, noch relativ hoch.

Es ist demnach Aufgabe der Erfindung, ein Energiesparhaus anzugeben, welches unter nur geringer Ausnutzung einer externen Spannungsversorgung oder ganz ohne eine solche auskommt.

Die Aufgabe wird durch das erfindungsgemäße Energiesparhaus gelöst, welches dadurch ausgezeichnet ist, dass das hausinterne Spannungsnetz des Energiesparhauses im Niederspannungsbereich betrieben wird.

Ein derartiges Energiesparhaus kann vorteilhafterweise einen gleichbleibenden raumklimatischen Komfort zu allen Jahreszeiten und eine hohe Energie- und Kostenersparnis bieten.

Vorteilhafte Weiterbildungen und Ausführungsformen der Erfindung gehen aus den Unteransprüchen hervor.

Ein bevorzugtes Ausführungsbeispiel eines erfindungsgemäß ausgestalteten Energiesparhauses ist in der Zeichnung schematisch dargestellt und in der nachfolgenden Beschreibung näher erläutert. In der Zeichnung zeigt:
- Fig. 1: eine stark schematisierte Ansicht eines Energiesparhauses, und
- Fig. 2: eine stark vereinfachte Darstellung der Komponenten der Energieversorgung eines erfindungsgemäß ausgestalteten Energiesparhauses.

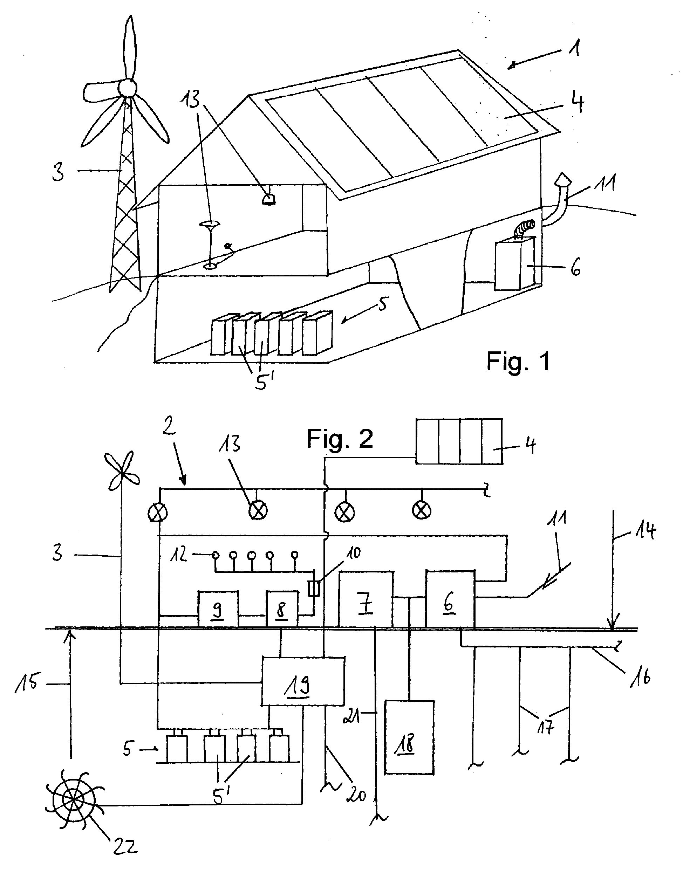

In Fig. 1 ist in stark schematisierter Ansicht ein Energiesparhaus 1 dargestellt, welches als Niedrigenergiehaus, Passivhaus, Nullhaus oder Plusenergiehaus ausgeführt sein kann.

Auf die Darstellung von typischen Merkmalen des Energiesparhauses 1, wie Isolierungen, spezielle Fenster und Türen etc. wurde aus Gründen der Übersichtlichkeit verzichtet.

Das Energiesparhaus 1 weist erfindungsgemäß eine gänzlich, zumindest jedoch in weiten Bereichen, beispielsweise im Bereich einer Beleuchtungsanlage 2, niederspannungsgeeignete Hausstromanlage 19 auf. Die Beleuchtungsanlage 2 ist dabei vorzugsweise mit Beleuchtungskörpern 13 mit lichtemittierenden Dioden (LEDs) ausgeführt, die für eine gute Ausleuchtung im gesamten Energiesparhaus 1 bei geringer Spannungsaufnahme sorgen. Die Betriebsspannung derartiger LED-Beleuchtungskörper 13 liegt gewöhnlich unter 50V, meist bei 12V oder 24V.

Weiterhin ist das dargestellte Energiesparhaus 1 so konzipiert, dass es zwar einen Anschluss 20 an das gängige externe Wechselspannungsnetz aufweist, auf diesen jedoch nur in Situationen mit hohem Energieverbrauch zurückgegriffen wird. Solche Situationen treten insbesondere bei der gleichzeitigen Benutzung von Haushaltsgeräten mit hoher Spannungsaufnahme wie Waschmaschinen, Staubsauger, Friteusen, Backöfen etc. auf.

Die zum Betrieb der niederspannungsgeeigneten Hausstromanlage 19 benötigte Energie kann durch die Ausbeutung diverser alternativer Energiequellen wie beispielsweise Solarenergie, Wind- oder Wasserkraft oder Bioenergie bereitgestellt werden. Die Erzeugung von Energie kann dabei mittels zumindest einer der folgenden Energieerzeugungsvorrichtungen erfolgen: Windrad 3, Wasserrad 22, Sonnenkollektor 4, Wärmepumpe 6, Biogasanlage, Regenwasseranlage o.ä., welche zumindest eine Energieerzeugungsvorrichtung als Einspeisung in die Hausstromanlage 19 wirkt. Die einzelnen Windräder, Solarpaneele, Wasserräder etc. können einzeln, in Gruppen von mehreren Einheiten oder auch kombiniert eingesetzt werden, je nachdem, wie es die bauliche und platzmäßige Situation im und am Energiesparhaus 1 ermöglicht. Beispielhaft sind in Fig. 1 Sonnenkollektoren 4 auf einem Dach des Energiesparhauses 1 und ein Windrad hinter dem Energiesparhaus 1 angeordnet. Befindet sich ein Bach in Reichweite, kann weiterhin z.B. ein Wasserrad 22 installiert und die so produzierte Energie in die Hausstromanlage 19 eingespeist werden. Eine Speicherung der aus den verschiedenen Energiequellen gewonnenen Energie kann in einem Energiespeichersystem 5, beispielsweise in einer beliebigen Anzahl von Akkumulatoren 5', die vorzugsweise in einem Keller oder einem Nebenraum des Energiesparhauses 1 angeordnet sind, erfolgen, welches mit der Hausstromanlage 19 in Verbindung steht.

Zur Beheizung des Energiesparhauses 1 kann ein Anschluss an eine externe Heizenergieversorgung, insbesondere an einen Fernwärmeanschluss 21, vorgesehen sein. Weiterhin ist auch eine Beheizung durch eine autarke Heizvorrichtung wie eine Hackschnitzel- oder Pelletsheizung 18 oder einen Kaminofen, durch eine Wärmepumpe 6 oder einen Anschluss an eine thermale Tiefenwasserquelle 15 möglich, so dass der Fernwärmeanschluss 21 nur unter extremen Klimabedingungen benötigt wird. Die Wärmepumpe 6 wird dabei, wie in Fig. 2 schematisch dargestellt, durch eine Flachverlegung 16 von Rohren und/oder Tiefenbohrungen 17 gespeist und steht über eine Luftzufuhr 11 mit der Umgebung in Verbindung.

Um unabhängig von der Förderleistung der Wärmepumpe 6 über Warmwasser zu verfügen, kann ein mit der Wärmepumpe 6 in Verbindung stehender Warmwasserspeicher 7 vorgesehen sein.

Die gesamte Hausstromanlage 19 wird über ein Lastmanagementsystem 8 mit einem Bussystem 10 und/oder einen Inverter 9 betrieben. An dem Inverter 9 ist dabei zumindest ein 230V-Anschluss 12 ausgebildet, welcher den Anschluss von handelsüblichen Elektrogeräten erlaubt. Das Bussystem 10 kann dabei in bekannter Weise als EIB-Bussystem ausgebildet sein.

## Patentansprüche

1. Energiesparhaus (1), umfassend :
- zumindest eine vom externen Spannungsnetz unabhängige Energieerzeugungsvorrichtung,
- ein Heizsystem,
- ein Energiespeichersystem (5),
- ein Lastmanagementsystem (8), und
- eine Hausstromanlage (19),
**dadurch gekennzeichnet, dass** die Hausstromanlage (19) im Niederspannungsbereich betreibbar ist.

2. Energiesparhaus nach Anspruch 1, **dadurch gekennzeichnet, dass** eine Beleuchtungsanlage (2) des Energiesparhauses (1) LED-Beleuchtungskörper (13) mit einer Betriebsspannung von unter 50V umfasst.

3. Energiesparhaus nach Anspruch 1 oder 2, **dadurch gekennzeichnet, dass** die zumindest eine Energieerzeugungsvorrichtung eine oder mehrere der folgenden Vorrichtungen umfasst: Windrad (3), Wasserrad (22), Sonnenkollektor (4), Wärmepumpe (6), Biogasanlage, Regenwasseranlage, welche zumindest eine Vorrichtung als Einspeisung in die Hausstromanlage (19) wirkt.

4. Energiesparhaus nach einem der Ansprüche 1 bis 3, **dadurch gekennzeichnet, dass** ein Anschluss an eine externe Heizenergieversorgung, insbesondere einen Fernwärmeanschluss (21), vorgesehen ist.

5. Energiesparhaus nach einem der Ansprüche 1 bis 4, **dadurch gekennzeichnet, dass** die Heizanlage durch die Wärmepumpe (6) und/oder den Fernwärmeanschluss (21) und/oder durch thermales Tiefenwasser (15) und/oder durch eine Hackschnitzel- oder Pelletsheizung (18) gespeist wird.

6. Energiesparhaus nach einem der Ansprüche 1 bis 5, **dadurch gekennzeichnet, dass** die Wärmepumpe (6) durch eine Flachverlegung (16) von Rohren und/oder Tiefenbohrungen (17) gespeist wird.

7. Energiesparhaus nach Anspruch 6, **dadurch gekennzeichnet, dass** die Wärmepumpe (6) über eine Luftzufuhr (11) mit der Umgebung in Verbindung steht.

8. Energiesparhaus nach einem der Ansprüche 1 bis 7, **dadurch gekennzeichnet, dass** ein mit der Wärmepumpe (6) in Verbindung stehender Warmwasserspeicher (7) vorgesehen ist.

9. Energiesparhaus nach einem der Ansprüche 1 bis 8, **dadurch gekennzeichnet, dass** das Lastmanagementsystem (8) ein Bussystem (10) und/oder einen Inverter (9) umfasst.

10. Energiesparhaus nach Anspruch 9, **dadurch gekennzeichnet, dass** an dem Inverter (9) zumindest ein 230V-Anschluss (12) ausgebildet ist.

11. Niedrigenergiehaus nach Anspruch 9 oder 10, **dadurch gekennzeichnet, dass** das Bussystem (10) als EIB-Bussystem ausgebildet ist.

12. Energiesparhaus nach einem der Ansprüche 1 bis 11, **dadurch gekennzeichnet, dass** ein Anschluss (20) an ein externes Spannungsnetz vorgesehen ist.

13. Energiesparhaus nach einem der Ansprüche 1 bis 12, **dadurch gekennzeichnet, dass** die Hausstromanlage (19) mit dem Energiespeichersystem (5) in Verbindung steht.

14. Energiesparhaus nach Anspruch 13, **dadurch gekennzeichnet, dass** das Energiespeichersystem (5) einen oder mehrere Akkumulatoren (5') umfasst.
